# EUROPEAN PATENT SPECIFICATION

(11) **EP 3 623 133 B1**
(45) Date of publication and mention of the grant of the patent: **04.11.2020**
(21) Application number: 19197277.7
(22) Date of filing: 13.09.2019
(51) Int. Cl.: B29C 45/30, B29C 45/28, B29D 35/12, B29D 35/14, B29C 44/38, B29C 44/58

(54) **INJECTION MOLDING SYSTEM WITH A PRESSURE DEPENDENT VALVE**
SPRITZGIESSSYSTEM MIT EINEM DRUCKABHÄNGIGEN VENTIL
SYSTÈME DE MOULAGE PAR INJECTION À SOUPAPE DÉPENDANT DE LA PRESSION

(30) Priority: 13.09.2018 EP 18194252
(43) Date of publication of application: 18.03.2020
(73) Proprietor: DESMA Schuhmaschinen GmbH, 28832 Achim (DE)
(72) Inventor: Buchmüller, Viktor, 28832 Achim (DE); Strauß, Adrian, 27374 Visselhövede (DE)
(74) Representative: Hertin und Partner Rechts- und Patentanwälte PartG mbB

(56) References cited:
- EP-A2- 0 187 360
- EP-A2- 0 513 774
- WO-A1-2011/054509
- DE-A1- 2 306 366
- DE-A1- 19 521 315
- JP-A- S60 120 023
- JP-A- S63 111 803
- US-A- 3 988 797

## Description

The invention relates to an injection molding system comprising a valve situated within a sprue. The valve can be controlled to allow for the buildup of a preferably predefined pressure prior to initiating injection of the molding material into the cavity. The invention is particularly well suited for the injection-molding production of shoe soles, especially via Multi-Section-Injection (MSI) technology. The invention enables reproducible pressure buildup and precise control of the impact point of injected material. The invention further relates to methods of using an injection molding system of the invention and kits for equipping injection molding systems with a valve-controllable sprue.

### BACKGROUND AND PRIOR ART

Injection molding is a technology commonly used for high-volume manufacturing of items made of thermoplastic or foam material, most commonly thermoplastic polymers. During a typical injection molding process, a molding material is forcefully injected into a mold cavity having a particular cavity shape. The injected molding material is held under pressure in the mold cavity, cooled, and then removed as a solidified part having a shape that essentially duplicates the cavity shape of the mold.

One application of injection molding relates to the manufacturing of shoe soles.

For instance, US Patent 3,915,608 describes an injection molding system for bonding shoe soles to uppers including a turntable rotatably mounted on a fixed base and supporting a plurality of molds. Each mold includes mold sides and a piston-operated base. In order to produce a shoe, a lasted upper, i.e., a last with a shoe upper mounted thereon, is moved downwardly at a molding station to close a mold cavity formed by the mold sides and mold piston, and a sole is molded successively onto the base of each lasted upper at the molding station. Immediately prior to molding, the lasted upper closes the top of the mold, i.e., the mold cavity is formed and the turntable is rotated so that the mold opposes the dispensing head of a horizontal extruder, which injects a charge of thermoplastic material, e.g. polyvinyl chloride, into the mold under pressure to form the shoe soles.

Shoe soles are no longer considered to be single colored or single property objects formed from synthetic materials. Instead it is desirable to produce shoe soles with various hardness zones or colors, for both technical and aesthetic improvements to the wearer.

DE 10 2015 108 086 describes an injection molding system that allows for the production of multilayered shoe soles. The injection unit comprises a mixing head in which a mixing screw is situated that leads into a nozzle mouthpiece connectable to a sprue. Different base materials and additives can be introduced into the screw chamber and subsequently injected via the nozzle mouthpiece into the cavity. The point of impact within the cavity is governed by the material throughput and rotational speed of the mixing screw. Typical base materials include polyols or isocyanates to yield polyurethane, whereas the additives may be chosen to yield the desired material properties such as hardness, color etc. In order to produce a multi-sectioned shoe sole, different material compositions are injected towards predefined locations of the molding cavity by regulating the material throughput.

However, variation in the point of impact may lead to an undesired mixing of materials of the different zones and a compromised separation of the sections.

Different systems are known in the prior art for controlling the injection of the molding material into a mold cavity.

For instance, EP 0 187 360 A2 discloses a device for the production of molded parts from a flowable reaction mixture. It discloses the preamble of claim 1.

The device exhibits a sprue channel with a changing cross-section and a settling chamber in front of which a throttle gap is connected. The throttle gap shall allow a control of the flow velocity to ensure a closed flow front during the filling process.

US 3728053 A relates to an injection molding device for producing plastic objects, wherein the injection material is injected into a molding cavity by means of a mixing screw via a collection chamber, a nozzle and a sprue channel. A shut-off element can be opened and closed between the collection chamber and the molding cavity to control the process.

JP S60 120023 A discloses an injection molding device with a 3-way valve in front of a sprue channel. The 3-way valve allows an initial reaction mixture mixed with air bubbles to be fed from the mixing chamber first into a storage container, before it is fed into the cavity.

DE 195 21 315 A1 relates to a device for the production of molded parts from polyurethane with a solid skin and a foamed core. For this purpose, DE 195 21 315 A1 suggests a 4-component mixing head from which the skin-forming reaction system and foam system are successively fed into an accumulator. A closing piston allows the sprue channel to be blocked during a reaction sequence in the accumulator.

JP S63111803 A relates to an injection unit for the manufacturing of shoe soles, wherein at the end of the sprue an upper and lower gate is present. Depending on the passage of the respective gate the injected material reaches different locations of the molding cavity, such that a more homogenous coverage can be achieved.

DE 2 306 366 discloses an injection unit for the manufacturing of shoe soles, wherein part of the sprue is pivotable to allow for redirecting the injection of molding material into a cavity. However, none of these documents provide solutions for more precisely controlling the point of impact during an injection processes, as it would be beneficial in particular for providing multi-sectioned molding part.

In light of these difficulties, improved solutions are required for increasing the reliability and accuracy of injection molding systems, in particular with respect to enhancing more exact separation of multiple molding materials injected into separate regions within a single mold.

### SUMMARY OF THE INVENTION

An objective of the present application was to overcome the disadvantages of the prior art and to provide an alternative or improved injection molding system that ensures reliable and precise injection of molding material.

The problem is solved by the features of the independent claims. Preferred embodiments of the present invention are provided by the dependent claims.

The invention therefore relates to an injection molding system for manufacturing a molded article, preferably a shoe sole, comprising:
an injection unit comprising a nozzle;
a sprue;
a cavity; and
a control unit,
wherein the nozzle is connectable to the sprue, such that molding material is injectable via the sprue into the cavity to form a molded article, wherein the system comprises a valve situated within the sprue and wherein the control unit is configured to introduce molding material into the sprue while the valve is closed, and to open the valve after a time has elapsed, such that an increased (preferably predefined) pressure is achieved within the sprue prior to opening the valve and injecting the molding material into the cavity, wherein the control unit comprises reference data for a correlation of the elapsed time and/or the increased pressure with a point of impact of the injected molding material in the cavity.

With the system according to the invention it is possible to inject the molding material into the cavity with an unprecedented precision. In systems of the prior art the distance of injected material and the exact point of impact of the molding material within the cavity is controlled primarily by the material throughput. The velocity of the material passing through the screw and nozzle was typically the only regulator of injection precision, which was typically low.

In particular when the injection molding system is not a completely sealed system, variations in the distance that the material is injected and thus the point of impact arise. Moreover, due to a (partially) open system, as for instance when the cavity is not completely air-tight, the pressure for reaching a desired impact point cannot be provided at time point zero, when an injection into the molding cavity is initiated. Instead the point of impact of the injected molding material within the mold or cavity will travel, i.e. will progress from a point closer to the nozzle to a point further away as velocity or pressure of the injected material increases, and returns nearer to the nozzle as the injection is halted.

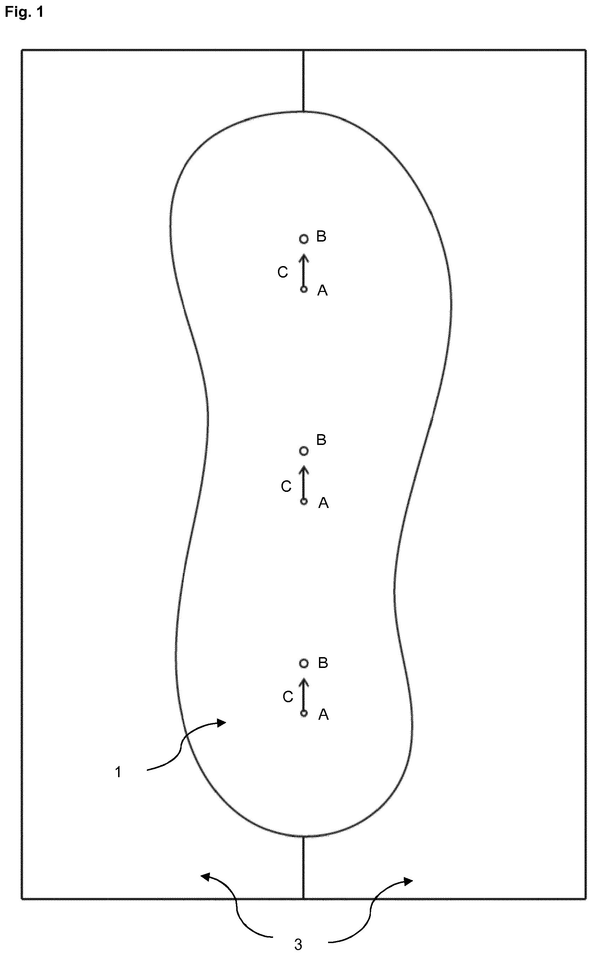

In particular, for multi-sectioned molding parts this leads to a contamination of the different sections (see also Fig. 1-4). Such contamination can be particularly disadvantageous, when reactive or foamable molding materials such polyurethane are injected, as is often the case in the manufacture of shoe soles. In this case, the contamination may lead to aberrant reactions in undesired locations or sections of the cavity, leading to deformed, aesthetically displeasing or uncomfortable shoe soles, as the various zones of the shoe sole, intended to be achieved using e.g. Multi-Section-Injection (MSI) technology, blend into one another or are positioned incorrectly.

In contrast, the injection molding system according to the invention is configured to allow for the buildup of pressure within the sprue or feeding channel of the sprue upstream of the cavity. Thereby the necessary pressure in order to inject the molding material to the desired location can be provided upon time point zero, i.e. when the valve is opened and the material is injected into the cavity. By controlling the pressure that builds up within the sprue, the point of impact can be reproducibly controlled eliminating undesired variations and thus ensuring a reliable and precise injection process.

As used herein the "injection unit" refers to a device, an apparatus or a system that allows for the injection of molding material into a cavity. Different injection units are known in the prior art and may be employed in the system according to the invention. One example is the unit described in DE 10 2015 108 086.

A typical injection unit will comprise an inlet for the provision of molding material, which may e.g. be stored e.g. in a molding material reservoir. In case the molding material is provided as a plastic resin in the form of small beads or pellets, as it is often the case for various plastic products, the injection unit may comprise a heating or shearing component to melt the resin beads. In case the molding material relates to duroplastic and/or thermoplastic synthetic components, such as base materials and additives (which may be polymerizable and/or foamable) the injection unit may comprise a mixing head for mixing said components and inlets for allowing for the provision of the components to the mixing head. As described herein the injection unit shall however not be limited to such embodiments but may encompass any device configured for the injection of a preferably liquid or foamable molding material via a nozzle into a molding cavity.

As used herein the term "nozzle" preferably refers an outlet passage of the injection unit from where the molding material may be injected into a molding cavity. To this end, the nozzle is connectable to a sprue. The injection unit may comprise for instance a nozzle mouthpiece that is geometrically configured to match the entrance of a sprue such that upon translating the nozzle towards the sprue, a fluid connection between the injection unit and the sprue is formed.

It is further preferred that the connection of the nozzle mouthpiece and the sprue is largely sealed in order avoid any leakage of the molding material. The sealing preferably results in an airtight connection and may e.g. be ensured by pressing a nozzle mouthpiece against the housing of the sprue. To this end it can also be preferred in some embodiments to provide additional sealing means, such as a sealing ring. It is preferred in some embodiments that the injection unit comprising the nozzle is translatable, it may however also be preferred that the sprue can be translated in order to form the connection. To this end the injection molding system may comprise any suitable translation mechanism including but without limitation to a linear actuator.

It is preferable in some embodiments that the injection unit comprising the nozzle is in a horizontal or near horizontal position with respect to the molding cavity into which the molding material is injected. The propagation direction of the molding material within the nozzle as well as the sprue is thus preferably horizontal or near horizontal. In other embodiments the nozzle may be positioned above or below (e.g. vertically or near vertically) the entrance to the sprue, for example if the sprue comprises a right angle or near right angle bend in order to eject the molding material in an essentially horizontal direction into the molding cavity.

After connecting the nozzle with the sprue, the molding material may flow into the sprue channel. The speed and pressure of the flow rate is controllable via the material input into the injection unit. The rate of the material input is preferably controlled by the control unit.

As used herein, the "control unit" preferably refers to any computing device or system having a processor, a processor chip, a microprocessor or a microcontroller to allow for an automatic control of the components of the injection molding system, such as the injection unit or the valve. The components of the computer system may be conventional or custom-configured for the particular implementation. Preferably the computer system has a processor, an input device such as a keyboard or mouse, a memory such as a hard drive and volatile or nonvolatile memory, and computer code (software) for controlling the components of the injection molding machine.

The control unit may also comprise a programmable printed circuit board, microcontroller, or other device for receiving and processing data signals from the components of the system such as the position of the nozzle with respect to the sprue or other sensory information. The control unit preferably further comprises a computer-usable or computer-readable medium, such as a hard disk, a random access memory (RAM), a read-only memory (ROM), a flash memory etc., on which a computer software or code is installed. The computer code or software to perform the control of the components of the injection molding system may be written in any programming language or model-based development environment, such as but not limited to C/C++, C#, Objective-C, Java, Basic/VisualBasic, MATLAB, Simulink, StateFlow, Lab View, or assembler.

The computer software, and any functional descriptions of the computer software by description of controlling particular devices or aspects of the system described herein, are considered technical features due to a direct physical output on the manufacturing system. Functional descriptions of software may therefore be considered as preferred and defining embodiments of the invention. The particular computer code employed is available to a skilled person and may be constructed accordingly using standard knowledge.

The tern "control unit is configured to" perform a certain operational step, such as introducing molding material into the sprue or opening or closing the valve, may encompass a custom-designed or standard software installed on said control unit that initiates and regulates these operational steps.

According to the invention the control unit is configured to introduce molding material into the sprue while the valve is closed. As described above, to this end the control unit may comprise a computer software that will allow for the necessary steps, in combination with the physical devices required for the function. Depending on the design of the molding system these steps may include the translation of the nozzle towards the sprue, closing of the valve or ensuring that the valve is closed, initiation and control of the input rate of molding material into the injection unit, e.g. by controlling suitable connectors or valves.

"Reference data" shall relate to any data that allows for a correlation of the elapsed time and/or increase pressure with a desired point of impact of the molding material within the molding cavity.

The reference data may for instance relate to a certain time delay between the time point of an initiation of the injection of molding material into the nozzle (i.e. by opening the inlets for the provision of molding material) and the time point at which the valve is opened to initiate the injection into the molding cavity. If other parameters, such as the material throughput or input into the injection unit are kept the same, the time delay and measured injection distance correlate very well. By acquiring reference data for the typical preset parameter for a certain type of molded article, or a certain material, volume and/or target region, e.g. for a certain shoe sole, a desired predefined pressure may be reliably achieved using an reference for the elapsed time and results in a reproducible injection pattern.

For such an embodiment an exact determination of the pressure building-up within the sprue, e.g. by means of a pressure sensor is not necessary.

The reference data may however also relate to data that correlates the increase in pressure, while molding material is injected into the sprue prior to opening the valve with a point of impact of the injected molding material in the cavity.

For instance, the reference data may relate to thresholds for a predefined pressure that will result in a desired point of impact. The pressure sensor may be located within the sprue or situated further upstream within the injection unit comprising the nozzle and continuously measure the pressure and thus observe the pressure building up within the system of the injection unit comprising the needle and the sprue. By comparing the measured pressure to the reference data, the control unit may precisely control the opening of the valve once a predefined pressure is achieved such that a desired injection distance and point of impact is achieved.

The reference data may relate to any data that allows for the correlation of a desired impact point with the elapsed time and/or increased pressure. For instance, the reference data may be provided as a lookup table or as parameters for a mathematical relationship that allow for a correlation of the entities. The reference data may for instance be gained by conducting appropriate calibration experiments that determine the relationship between an elapsed time and/or increase pressure with a desired injection distance and thus point of impact.

Typically, the reference data may be stored on a computer-usable or computer-readable medium on the control unit. Any format may be suitable which is used in the industry. The reference data may be stored in a separate file and/or integrated in the computer code or software (e.g. in the source code) that performs the control of the components of the injection machine as described herein.

As used herein the term "sprue" preferably refers to a channel or a plurality of channels situated upstream of the cavity, through which the molding material passes from the injection unit to the cavity. The sprue therefore may be considered as a feeding channel, for example when an unbranched sprue (single feeding channel) is evident. The feeding channel refers in some embodiments preferably to the part of the sprue that directly leads into the molding cavity. In preferred embodiments, the sprue comprises a single feeding channel leading into the molding cavity. It may however also be preferred to have a branched sprue, comprising multiple feeding channels, leading into multiple separate molding cavities, or a single molding cavity with multiple inlets. As used herein, the term upstream and downstream are used in relation to the propagation direction of the molding material, wherein inlets for the provision of molding material will be upstream of the molding cavity.

Preferably, in some embodiments, the term "sprue" in the present invention does not relate to a solidified plastic piece of an injection-molding manufactured item remaining after injection, cooling and release of the item from an enclosed injection system. In some embodiments, the molding material is not allowed to cool, set or react to completion to leave a solid portion of the molding material in the sprue. The sprue is preferably emptied after injection prior to the next injection event.

In some embodiments, the sprue is emptied item for item, in other words between items, that are to be manufactured. For example, after the completion of one shoe sole (outer sole and/or middle sole), including optionally a closing element being applied in the form of a shoe last onto which an upper is wrapped, and then positioned onto the sole, such that the shoe sole is directly molded on the shoe upper, the sprue is emptied by ejecting material remaining in the sprue, before a new cavity is filled using the device or system of the present invention.

In some embodiments, the sprue is not emptied between injection of different materials into one cavity, for example where 2 or more zones of the item to be created are present and two or more corresponding materials are injected into the cavity. In some embodiments, the sprue is not emptied between materials, but a subsequent (e.g. second) material is guided (immediately) from the injection unit into the sprue, pressure is built up again by guiding material into the sprue whilst the valve is closed, and subsequently releasing/opening the valve to inject the second material.

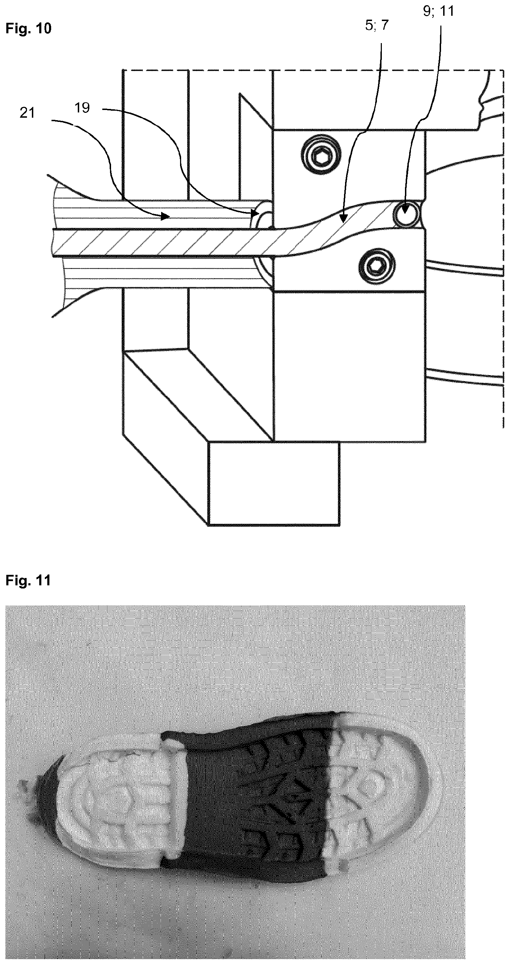

In some embodiments, the method of the invention employs automated or semi-automated manufacture of multiple items one after the other. In some embodiments, the cavities and/or the injection units rotate about an axis, such that the injection unit remains stationary and a rotating or sliding array of multiple cavities is "presented to" the injection unit, or the injection unit rotates about a ring of cavities or slides along an array of cavities, thereby moving from one cavity to the next upon completion of the injection. In such embodiments, the sprue is preferably emptied between items/cavities, while the sprue can but must not be emptied between different materials injected into a single cavity. The sprue can also be emptied by injecting air into the sprue, by separating two halves of a sprue block (as e.g. shown in Figures 10, 13 and 14), if for example the material has set/polymerized, or by other means.

As used herein the term "valve" refers to any device that allows to regulate, direct or control the flow of a material, preferably a fluid, by opening, closing, or partially obstructing a passageway. The injection molding system as described herein is characterized by a valve that allows to close and open the sprue (or the feeding channel of the sprue). A person skilled in the art may choose a suitable valve among various known valve types including, but not limited to ball valves, butterfly valves, piston valves, ceramic disc valve, throttle valves, diaphragm valve, gate valve, globe valve, knife valve, needle valves, pinch valve, piston valves, plug valves or spool valves. Different actuator system for the valves can be employed, including but not limited to hydraulic, pneumatic, manual, motorized or solenoid valves. In preferred embodiments the valve is a piston valve, more preferably a movable locking bolt under a pneumatic control.

When the control unit initiates the injection of molding material into the sprue the molding material will progress within the sprue. However, due to the closed valve the molding material may not enter the molding cavity. Instead the pressure within the sprue increases (pressure buildup). Only after a certain time has passed, the control unit is configured to open the valve. The pressure that builds up within the sprue will depend on the rate of the molding material entering the injection unit and the elapsed time and may thus be reproducibly controlled by the control unit. After opening the valve, the molding material is expelled (injected) into the cavity. The expel velocity and thus the travel distance and point of impact of the molding material within the cavity directly correlates with the defined pressure built up within the sprue prior to valve opening.

As used herein the terms "point of impact", "impact point", "impingement point" or "point of contact" with regard to the injection of molding material into the cavity are used synonymously. When referring to a point of impact within, in or with respect to the cavity, typically the point of contact on the bottom of the molding element, e.g. a base element, forming the cavity is meant. The point of impact thus relates to the point of contact of the material on said bottom molding element at the time of injection, when the bottom molding will typically be in a preset position.

Advantageously, in order to achieve reproducible results, the value of the pressure as such does not have to been known in advance. In some embodiments, the rate of molding material input and time delay until the valve opens, as regulatable by the control unit, will lead to the same predefined pressure, whether its value is known or not. Thus, it is possible to experimentally determine suitable parameters by correlating the impact point of the molding material with the time delay before the valve opening for otherwise constant conditions, such as for particular molding materials and the particular injection unit.

For a production of a shoe sole from polyurethane molding materials using sprue channels with the preferred dimensions as described herein, time delays of 1 milliseconds to 5 seconds, preferably 5 milliseconds to 1 second, have proven to provide especially beneficial results. In other embodiments it may also be possible to use sensors in order to measure directly the buildup of a volume or pressure in order to correlate these measurements with the desired impact point. The time delay will depend on various factors, such as the material employed, e.g. its viscosity, on the flow rate of material provided from the injection unit into the sprue, the size of the mold, distance between valve and impact point, amongst other factors.

The invention benefits thus from a time, volume and pressure dependent control of the valve in relation to the injection of molding material. As described above, by allowing for the buildup of a preferably predefined pressure, the pressure curve during the injection process is more predictable, reproducible and constant. In particular, no initial pressure needs to build up as it is the case for methods of the prior art. A dragging of material from an initial point of impact towards a desired and final point of impact is eliminated. Furthermore, the additional controllable parameter of a predefined pressure within the sprue prior to injection allows for higher flexibility in designing the dimensions of the sprue or feeding channel of the sprue.

For a typical injection molding system, there will be constraint with regards to possible rates of material throughput. The terms material throughput rate and material input rate are used herein synonymously and refer to a volume of molding material that is promoted into the injection unit, e.g. under the control of suitable valve inlets, as a measure of time.

For a given diameter of a sprue a maximal material throughput rate defines the farthest possible injection distance. An enlargement of the diameter will, due to the limitation of the maximal material throughput rate, result in a smaller maximal injectable distance such that the impacts points may not reach the entire length of the molding cavity. By allowing for pressure buildup within the molding system as described herein, the maximal injectable distance may be extended. Furthermore, since larger diameters for the sprue can be used, also smaller injection distances may be reached. For a minimal material throughput rate an enlarged diameter will allow to reliably reach impacts points that are closer to the end of the sprue.

The system therefore allows for a pattern of impact points with broader coverage of the molding cavity resulting in more controllable and reliably produced molding articles. These advantages are particularly relevant where multiple materials are to be injected into separate zones of the cavity. These advantages are particularly relevant for open or partially closed systems, where the molding material is propelled (e.g. through the air) to a particular target site within the mold, without progressing through an entirely closed system. These advantages are particularly relevant therefore for mold cavities that are positioned horizontally or essentially horizontally.

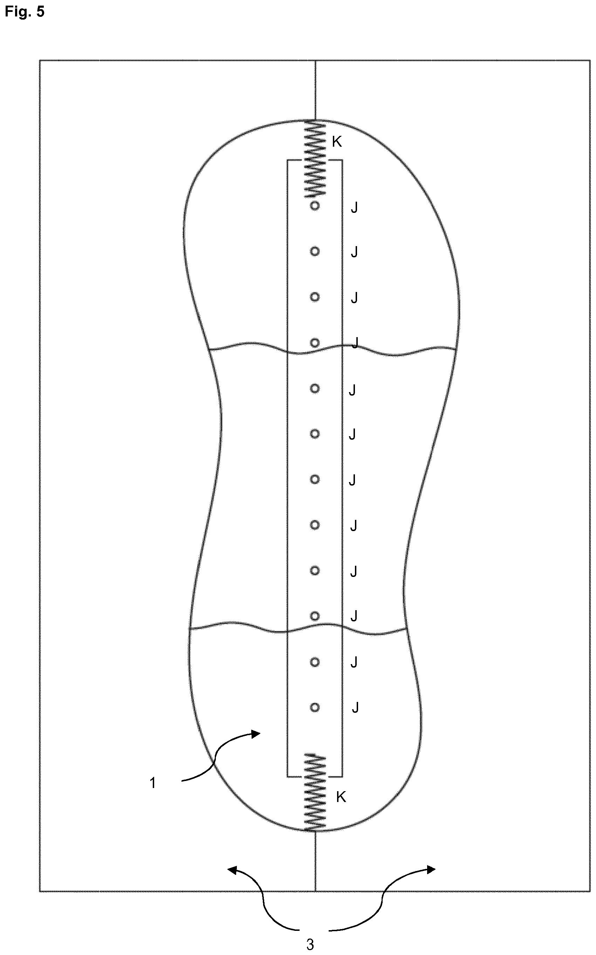

In a preferred embodiment of the invention the injection molding system is characterized in that the control unit is further configured to discontinue injection of the molding material by closing the valve. The possibility to controllably and suddenly close the valve upon termination of the injection process allows for a clean intersection of the injection stream. In some methods of the prior art, residual material from a terminated injection stream continues to be injected with decreasing distance and pressure, yielding a dripping stream of residual material (see also Fig. 5). In particular, when reactive or foamable molding materials such as polyurethane are used, such a contamination compromises the reproducibility and quality of the molded article. The controllable valve allows of an effective prevention of such contaminations and therefore significantly augments the production quality.

In a further preferred embodiment of the invention the injection molding system is characterized in that the control unit is further configured to partially close or open the valve in order to generate a constriction within the sprue.

As described above, for a given diameter of the sprue, the achievable injections distance will depend on the range of possible material throughput rates. Therefore, in a typical setting such as in the prior art, when different kinds of molded articles are to be produced, e.g. shoe soles of different sizes, a molding unit with a tailored dimension of the sprue is chosen for each type of molded article. To change the production type, it is therefore often necessary to change the molding unit.

Instead, in a preferred embodiment of the invention, a single typically larger diameter for the sprue may be installed. Herein, the partial closing of the valve allows to generate a constriction and thus an effective smaller diameter that can be tailored for each type of molded article.

Advantageously, the same valve may be used for constricting the sprue/feeding channel as for the buildup of pressure by (completely) closing the valve. In this case, it may be preferred that the control unit is configured to move the valve between two positions. One relates to a partially closed (or partially opened) configuration, in which a material stream is injected according to the effective channel parameter. A second position relates to a complete closure of the sprue/feeding channel, as it is the case prior to the initiation of the injection and preferably upon termination of the injection. This preferred embodiment results in a significant reduction of production time and cost, while maintaining a high flexibility and product quality.

In a preferred embodiment of the invention the valve comprises or consists of a movable locking bolt under pneumatic control. Preferably, the movable locking bolt is arranged transverse with respect to the sprue/feeding channel, i.e. transverse to the stream of molding material. The movable locking bolt may thus be translated under pneumatic control in a direction that is perpendicular to the propagation of molding material within the sprue. Such a valve allows for a particularly fast opening and closing of the sprue, which results in particularly accurate injection curves with an almost instant beginning and end.

The preferred embodiment thus ensures that the desired impact point is reached at time point zero, without any leakages, which may arise if the valve does not open sufficiently fast. Furthermore, the installation of a transverse movable locking bolt is simple, cost efficient and low in maintenance. The pneumatic control has a further advantage in that often the valve inlets that are used upstream of the sprue in a mixing head are also under pneumatic control, i.e. actuated by a pneumatic system. Therefore, the same pneumatic system may be used both for actuating the valve within the sprue as well other valves used in the injection molding system, constituting an efficient use of resources.

In a further preferred embodiment of the invention the valve is located within a distance from an end of the sprue or feeding channel facing the cavity of at least 2 mm, preferably at least 3 mm, at least 5 mm and no more than 40 mm, preferably 30 more preferably 20 mm. Most preferably the valve is located within a distance from an end of the sprue facing the cavity of 5 to 20 mm. Preferably the distances are measured from the center of the obstructing element of the valve, i.e. a piston or movable locking bolt, to the end of the sprue/feeding channel.

The inventors have realized that the pressure curves for the injection process are particularly constant and reproducible, if the valve is located as far as possible towards the end of the sprue or feeding channel in the sprue. In this case, a homogeneous pressure appears to build up within the sprue prior to the valve and thus in the closed system leading up to the nozzle of the injection unit. Since the valve is closely arranged towards the end of the sprue, upon an opening of the valve almost no dissipation occurs within the remaining distance of the sprue channel. Instead, the predefined pressure is transformed into a precisely controllable injection distance.

Excellent results could be achieved with a distance between the valve and end of the sprue of less than 40 mm, preferably less than 30 mm or 20 mm. However, for a distance below 5 mm, in particular below 3 or 2 mm the stabile function of the valve may be compromised. The aforementioned distances reflect therefore an optimal range for the positioning of the valve with respect to the beginning of the cavity.

In a further preferred embodiment of the invention the sprue exhibits a diameter of 1 mm to 15 mm, preferably 3 mm to 10 mm and/or a length of 5 mm to 200 mm, preferably 10 to 150 mm. In combination with the closable valve within the sprue, in particular when positioned at the end of the sprue facing the cavity, such dimensions ensure particularly reliable and constant pressure curves. Moreover, the dimensions above have proven to be particularly suited for the production of shoe soles, in particular when using polyurethane or similar foamable synthetic duroplasts as a molding material.

In a further preferred embodiment of the invention, the sprue exhibits a curved, preferably sigmoidal, shape, wherein the end of the sprue or feeding channel facing the cavity is situated above the opposite end of the sprue facing the nozzle. It is preferred that the injection unit comprising a nozzle is in a horizontal position with respect to the molding cavity form into which the molding material is injected. The propagation direction of the molding material within the nozzle as well as the sprue or feeding channel is preferably horizontal or near horizontal and the preferred sigmoidal shape relates to a modulation of said horizontal line such that the end of the sprue facing the cavity is situated above the opposite end of the sprue facing the nozzle.

The preferred geometric design of the sprue yields excellent injection curves for a variety of different molding materials. In particular, in case of the production of shoe soles from polyurethane as a molding material, a sigmoidal shape with a mildly increasing height along the sprue not only lowers energy dissipation, but also influences positively the ballistics of the injected stream, yielding to a particular reliable control of the point of impact within the molding cavity.

In a preferred embodiment of the invention the injection molding system is characterized in that the sprue comprises two or more feeding channels, wherein a valve is situated in each of the feeding channels. The two or more feeding channels may lead into a single molding cavity or separate molding cavities. The sprue may comprise multiple feeding channels or branches. In other words, the sprue may in some embodiments be branched. The branches or multiple feeding channels may therefore each comprise a valve, whereby the multiple valves may be operated and/or controlled either in a combined manner or independent from one another. In some embodiments, the sprue comprises a single valve upstream of a branching point for multiple feeding channels.

In one embodiment, the invention therefore relates to an injection molding system for manufacturing a molded article, preferably a shoe sole, comprising:
an injection unit comprising a nozzle;
a sprue;
a cavity; and
a control unit,
wherein the nozzle is connectable to the sprue comprising at least one (or two or more) feeding channel(s), such that molding material is injectable via the sprue into the cavity to form a molded article, wherein the system comprises a valve situated within the at least one (or two or more) feeding channel(s) of the sprue and wherein the control unit is configured to introduce molding material into the sprue while the valve is closed, and to open the valve after a time has elapsed, such that an increased (preferably predefined) pressure is achieved within the at least one (or two or more) feeding channel(s) of the sprue prior to opening the valve and injecting the molding material into the cavity.

By letting the feeding channels exit into multiple molding cavities, a single connection of the nozzle to the entrance of the branched sprue enables the production of multiple molding articles using a minimal requirement of control elements in the system. The embodiment thus allows for a reduction of production time and equipment costs.

In the case of a single molding cavity, the multiple feeding channels of a branched sprue may be for instance arranged at the same height, but in parallel with respect to the transverse direction of the molded article. Advantageously, thereby the point of impacts can be distributed along multiple parallel lines along the width of the molding cavity allowing for a more controlled and homogenous distribution of the molding material e.g. for a unitary molded article or shoes.

Alternatively, a molded article, such as a shoe sole, may not only be sectioned along the length of the shoe sole, but also along its width, resulting in additional degrees of freedom to optimize the molded article, e.g. shoe soles, for their particular need. For instance, for running shoes it is thereby possible to optimize the hardness of the inner and outer regions of the shoe sole to match a runner's profile.

For the preferred embodiment it is particularly preferred that each of the feeding channels has the preferred geometries described and that the valve is also positioned preferably close to the end of the sprue facing the molding cavity.

The valves can advantageously not only be used to ensure the buildup of pressure as described herein, but also to guide the injection stream either for a certain location within the same molding cavity or to guide a (preferably sequential) production of multiple molded articles in separate molding cavities.

In a further preferred embodiment, the injection molding system is characterized in that the control unit comprises reference data for the pressure within the sprue and the point of contact of the injected molding material in the cavity, preferably wherein the pressure within the sprue and the point of contact of the injected molding material in the cavity correlate with one another. The reference data may for instance relate to a certain time delay between the time point of an initiation of the injection of molding material into the nozzle (i.e. by opening the inlets for the provision of molding material) and the time point at which the valve is opened to initiate the injection into the molding cavity. If other parameters, such as the material throughput or input into the injection unit, are kept the same, the time delay and measured injection distance correlate very well. By acquiring reference data for the typical preset parameter for a certain type of molded article, or a certain material, volume and/or target region, e.g. for a certain shoe sole, a desired predefined pressure may be reliably achieved resulting in a reproducible injection pattern. A separate sensor is in this case not necessary.

In a preferred embodiment of the invention the injection molding system comprises a pressure sensor situated within the sprue, and wherein the control unit is preferably configured such that the valve may be opened or closed depending on the pressure determined by said sensor. A "pressure sensor" may refer to any device for the measurement of a pressure of gas or liquid. A person skilled in the art will be able to choose a suitable pressure sensor according to the type of molding material. In principle, any type of pressure sensor may used, including without limitation force collector types comprising a piezoelectric, a capacitive, an electromagnetic, an optical, a piezoresisitve strain guage or a potentiometric pressure sensing element.

The pressure sensor may be located within the sprue. The pressure sensor may also be situated further upstream within the injection unit comprising the nozzle. It may also be preferred to have multiple pressure sensors within the sprue and/or nozzle. The pressure sensor allows for a fast and precise observation of the pressure building up within the system of the injection unit comprising the needle and the sprue. Once a preferably preset threshold is reached the valve may be opened to allow for a precise injection process as described herein.

For the manufacturing of a shoe sole from polyurethane molding materials, thresholds for a predefined pressure in between 0 and 60 bar, preferably 1 to 50 bar, more preferably pressure increased above atmospheric pressure, or any pressure of or between 1, 2, 3, 4, 5, 10, 15, 20, 25, 30, 35, 40, 45, 50, 55 or 60 bar, or values in a range with end points of said values, allow for control and a precise distribution pattern.

The pressure sensor allows to very accurately control the injection based upon a predefined pressure. In particular, the measurement of the pressure as such allows to take into account variations in the process such as the addition of different additives that may lead to a different injection profile, as for instance expected from a simple time delay. By using a pressure sensor without the need of a calibration, different material input rates or compositions may be applied, while still controlling the desired impact point with a high fidelity.

In a preferred embodiment of the invention the cavity is formed by two side molding elements, a base stamp and a closing element. As used herein the term "cavity" or "molding cavity" takes the ordinary meaning in the state of the art and refers to a space in which the molded article is formed. The molding as such will be formed by limiting molding elements, which in the preferred embodiments may comprise two side molding elements, a base element and a closing element. The shaping of these elements governs the form of molded article. During injection, the cavity may be open, in that only two side molding elements, optionally with a base element, are present, wherein the material is injected into the cavity for subsequent closure, for example with a shoe last or upper.

In a preferred embodiment of the invention the cavity takes the shape of a shoe sole. The term shoe as used herein means all forms of shoe which have a sole, including but not limited to, dress shoes, boots, sneakers, clogs, sandals, slip on sandals and shoes, golf shoes, tennis shoes, running shoes, athletic shoes, hiking shoes, ski boots, cycling shoes, soccer boots, and the like. The shoe sole shall encompass different kind of soles including but not limited to a single layered sole, a multilayered sole, a multi-sectioned sole, a midsole or an insole.

The shoes sole may be produced as an isolated molded article that is subsequently attached or glued to produce the finished shoes. Alternatively, the closing element may be formed by a shoe last onto which an upper is wrapped such that the shoe sole is directly molded on the shoe upper.

The use of a valve as described herein has proven particularly valuable for producing shoe soles with unprecedented control and precision when using reactive or foamable materials such as polyurethane as a molding material.

In a preferred embodiment the injection unit comprises a mixing head with at least one, preferably at least two valve inlets for one or more base materials and one or more additives, wherein the mixing head is configured to mix the one or more base materials with the one or more additives to form the molding material, wherein the mixing head comprises preferably a mixing screw within a mixing chamber to which the at least one, preferably at least two valve inlets are connected, such that the one or more base materials and the one or more additives are mixable to form the molding material.

Using a single valve inlet for the one or more base materials and the one or more additives may be particularly suited for producing unitary molded articles, preferably shoe soles, wherein the same composition of molding material is used for manufacturing the entire shoe sole. The controllable valve allows to reach reliable a predetermined contact point. In case of a unitary shoe sole or molding article this is crucial in order to ensure a desired distribution of the molding material within the cavity, i.e. preferably on top of a base element as a molding element. Deviations in the pattern of impact points as they may occur using methods of the prior art may result in inhomogeneous shoe soles or even shoe soles lacking parts if the molding material did not fill the entire cavity over the preset maturation time.

The advantages of the precise control of the impact point are particularly evident when producing shoe soles having multiple sections with different characteristics. To this end it is particular preferred to have in at least two valve inlets for the one or more base materials and one or more additives.

In a preferred embodiment of the invention the control unit is configured to
- mix a first molding material and inject said first molding material in to a first section of the cavity; and subsequently
- mix a second molding material and inject said second molding material in to a second section of the cavity
such that a multi-sectioned molded article with at least two (distinct) sections is formed.

Thereby a shoe sole can be divided into at least two sections. It is evident however that the embodiment is readily extendable towards the manufacturing of multiple sections, for example three sections, in particular a heel section, a middle foot section and a foot tip or toe section. These various sections may be formed with various colors or densities in order to provide a customized shoe sole.

To this end different materials comprising various synthetic materials or additives duroplastic and/or thermoplastic synthetic components (such as base materials and additives, which may be polymerizable and/or foamable) may be introduced into a mixing head and subsequently injected into the distinct sectors. Multiple components may be provided into the mixing head by means of the two or more valve inlets, preferably 3, 4, 5, 6 or more and subsequently mixed to provide a homogenous or semi-homogenous solution, before being injected in a controlled order into the form cavity of the shoe sole.

The mixing head is preferably arranged in a horizontal position to the sole form, into which the synthetic material is injected. Using such a preferred system a shoe sole may be produced with individual sectors with different colors, material densities, abrasion properties, hardness, flexibility and the like depending on the synthetic material used for production.

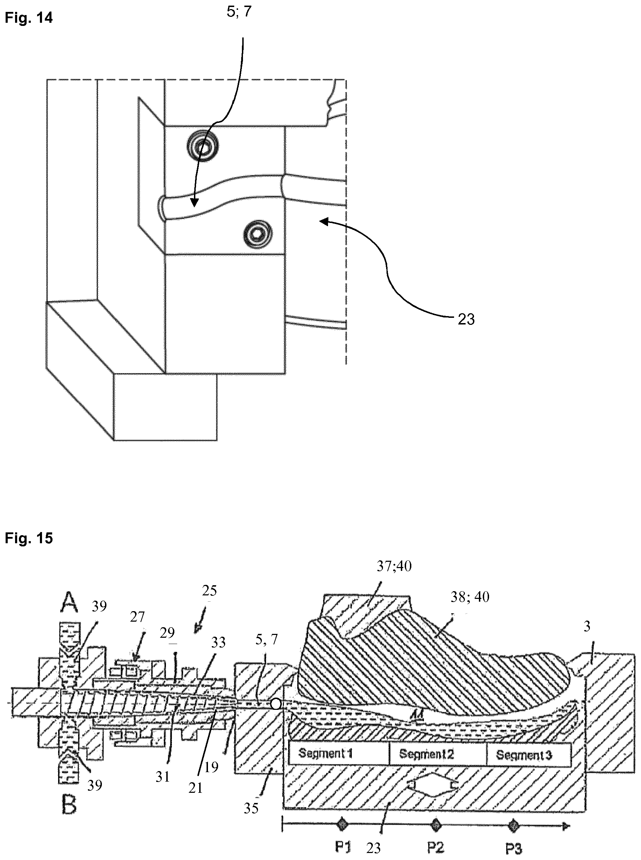

A preferred synthetic material for the shoe sole manufacturing process is polyurethane. The present invention incorporates technology where the liquid components for polyurethane production, optionally with additives, are mixed and then injected into the different zones of the shoe sole. The Figures 15-17 provided herein demonstrate a mixing head in which polyurethane may be used as a preferred synthetic material. However, for the systems and method described herein any duroplastic, thermoplastic or elastomeric synthetic material (preferably polymerizable or foamable) may be used, most preferably polyurethanes, TPU and rubber. Both solid polyurethane and/or foamed polyurethane may be employed.

Preferred materials therefore relate to duroplastic or elastomeric synthetic materials, such as but not limited to solid or foamed polyurethane, thermoplastic elastomers (TPE), sometimes referred to as thermoplastic rubbers, such as thermoplastic polyurethanes (TPU), thermoplastic co-polyester or thermoplastic polyamides.

In order to produce such shoe soles a commonly available mixing head may be applied, which is preferably assembled with a rotating extruder or mixing screw, whereby the screw ends in a nozzle from which the synthetic material is injected into the shoe sole form cavity. The synthetic material may be added to the screw with any given additives, mixed and subsequently excluded into the cavity. Various channels may be present for introducing multiple, potentially different, synthetic materials with or without various additives into the extruder screw via multiple valve inlets. Various valve inlets could be attached to mixing head with an appropriate control program, thereby allowing precise control of which material is injected into which shoe sole sector. A software, preferably installed on the control unit, is capable of controlling the valve inlets in order to regulate the valve inlet opening corresponding to the various synthetic materials applied to the mixing chamber.

The cavity in the shape of a shoe sole may preferably be formed from two side molding elements, a base element and a closing element, wherein the side elements may be attached to each other before injecting and before the closing element and/or the base element is used to compress the cavity volume in order to press the material into the appropriate form. For example, the cavity may be closed from above using a shoe upper or model of a foot enclosed by a shoe upper. The cavity may be closed from below with a base element underneath the shoe sole. In a preferred embodiment the shoe upper may be bound to the sole by pressing the closing element surrounded by the shoe upper into the shoe sole form cavity after the synthetic shoe sole has been injected.

In a preferred embodiment a mobile rack or device as a material reservoir can be envisaged for each additive or base material. Each of these racks or devices preferably comprises a pump, gas tank and a computer controller for dosing the various components into the valve inlets of the mixing head. Such racks or devices may be positioned on wheels and positioned appropriately in order to allow effective production.

Through the precise and quick dosing of various synthetic materials into the mixing head a precise material composition for each of the shoe sectors can provided.

In combination with the valve situated in the sprue as described herein an excellent strict and clear separation between sectors of desired properties may be obtained.

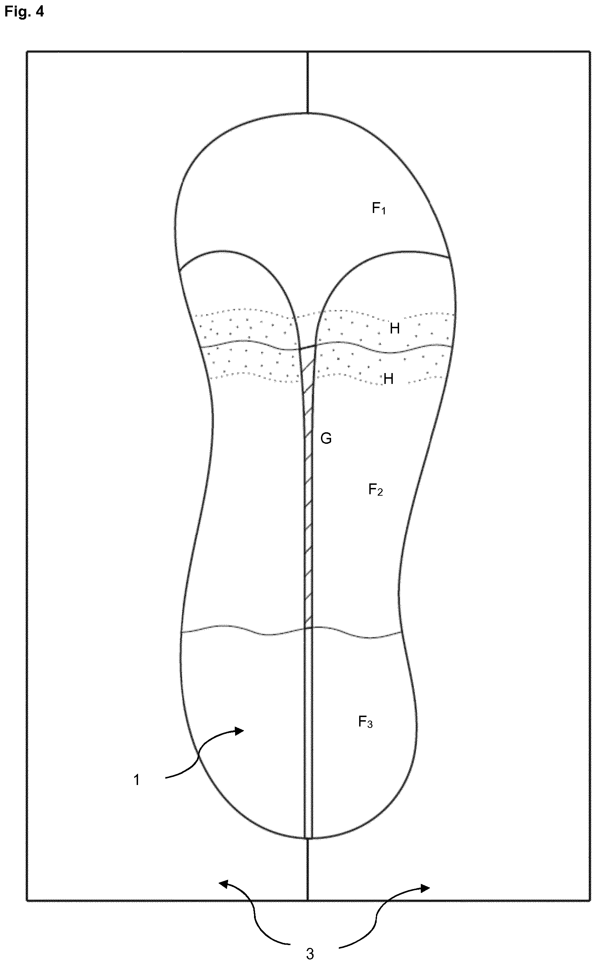

While in methods of the prior art variations in the point of impact per section may lead to contaminations (see also Fig. 4 and corresponding description), the reproducible pressure curves and precise control of the impact point prevents such contaminations.

Furthermore, if the valve in the sprue is closed during the mixing of molding materials for the different sections the molding material experiences even mixing energies, resulting in homogenously mixed material with the desired properties for said sectors or sections.

In a further aspect the invention relates to a kit for equipping an injection molding system with a valve-controllable sprue, comprising
- a module comprising a sprue in which a valve is situated,
- reference data for a correlation of the elapsed time and/or the increased pressure with a point of impact of the injected molding material in the cavity and a computer program adapted for generating commands suitable to control the valve in relation to the injection unit of an injection molding system as described herein and to introduce molding material into the sprue while the valve is closed, and to open the valve after a time has elapsed, such that an increased (preferably predefined) pressure is achieved within the sprue prior to opening the valve and injecting the molding material into the cavity. The kit allows to upgrade or equip an existing injection molding machine with a sprue comprising a controllable-valve that conveys the advantageous control of an injection process as described herein.

To this end the module may refer to a part of a molding unit that can be fitted into existing molding units. For instance, some side molding elements comprise a fit opening for a molding element that essentially only comprises a sprue. For these cases the module would preferably comprise such a molding element in which a controllable valve is situated. The module may however also refer to an entire molding unit comprising e.g. two side elements, which when combined form the sprue. The kit may further comprise actuators for controlling the valve or means for connecting the valve with suitable actuators.

The reference data and/or computer program may be provided on any computer-readable medium including but not limited to a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a transmission media such as those supporting the Internet or an intranet, cloud storage or a magnetic storage device. Preferably, the computer program will be configured such that its content may be implemented into the software controlling the to be equipped an injection molding system. Typically, the software would run on a control unit as described herein and control the opening of the valve based upon a comparison of the elapsed time and/or a measured pressure with the reference data as described herein. The reference data may be integrated in the computer program and/or stored in a separate file accessible by the computer program.

A person skilled in the art understands that technical features and advantages that have been disclosed in regards to the injection molding system described herein, equally apply to the kit. For instance, it will be particularly preferred for the module of the kit to comprise a sprue with the preferred geometric characteristics as described herein. Likewise for the injection molding system different embodiments for a preferred configuration of a control unit associated with operational steps have been disclosed. It is evident that a preferred software of the kit will comprise computational code that allows for such a configuration of a control unit to perform the preferred operational steps and that the preferred embodiments disclosed in relation to the reference data for the injection molding unit equally apply to the kit

In a further aspect the invention relates to a method for manufacturing a molded article, preferably a shoe sole, comprising
- providing an injection molding system as described herein,
- injecting the molding material into the sprue, while the valve is closed, thereby allowing an increase in pressure, preferably to a pre-defined pressure, within the sprue,
- opening the shutter after a time has elapsed, allowing the molding material to be injected to a predetermined location of the cavity, and
- closing the valve in order stop the injection of the molding material.

Again, a person skilled in the art understands that technical features and advantages that have been disclosed in regard to the injection molding system described herein, equally apply to the disclosed methods.

In a preferred embodiment the method characterized in that the molding material is provided prior to injection by mixing one or more base materials with one or more additives, wherein the one or more base materials are preferably a polyol and an isocyanate, such that a polyurethane is formed as a molding material and/or wherein the one or more additives are selected from a group comprising a color additive, a hardener, a softener, a crosslinker, gasing agent, a propellant, a cell opener or a stabilizer.

In a further preferred embodiment of the method duroplastic, thermoplastic or elastomeric synthetic materials are used, which are preferably polymerizable and/or foamable, such as but not limited to solid or foamed polyurethane, thermoplastic elastomers (TPE), sometimes referred to as thermoplastic rubbers, such as thermoplastic polyurethanes (TPU), thermoplastic co-polyester or thermoplastic polyamides.

For such synthetic materials the setting of a predefined pressure allows for a surprisingly accurate control of a point of impact of the injected molding material. The control of a valve as described herein is therefore particularly suited for any injection method that uses one of the aforementioned molding materials, in particular polyurethane, for which excellent results are achieved.

In a further preferred embodiment of the invention the method comprises the steps of:
- a first molding material is mixed,
- the first molding material is injected into the sprue while the valve is closed such that an increased (preferably predefined) first pressure is achieved within the sprue prior to opening the valve,
- the valve is opened to inject the first molding material to a first predetermined location of a first section of the cavity,
- the valve is closed to stop the injection of the first molding material,
- a second molding material is mixed,
- the second molding material is injected into the sprue while the valve is closed such that an increased (preferably predefined) second pressure is achieved within the sprue prior to opening the valve,
- the valve is opened to inject the second molding material to a second predetermined location of a second section of the cavity, and
- the valve is closed to stop the injection of the second molding material.

Said method steps allow for the manufacturing of a multi-sectioned shoe sole comprising at least two sections with desired characteristics. Different characteristics of two sections are achieved by providing or mixing accordingly a first and second molding material. As described above, to this end various synthetic materials are dosed together with appropriate additives into a mixing head.

In order to inject the first and second molding material into the respective sections of the molding cavity different rates for the material throughput may be chosen. A higher material throughput rate will yield a greater injection distance. By using the controllable valve a preferably predefined pressure for each of the sections can build up allowing for a precise injection curve and control of the impact point.

Furthermore, after finishing a first section the valve abruptly intersects the injection, thereby impeding any further leakage. To eject the remaining first material a cleaning shot may be performed before initiating injection of the next section. It is also possible to eject the remaining first material into the first section by an overpressure before continuing to inject the second material into the second section.

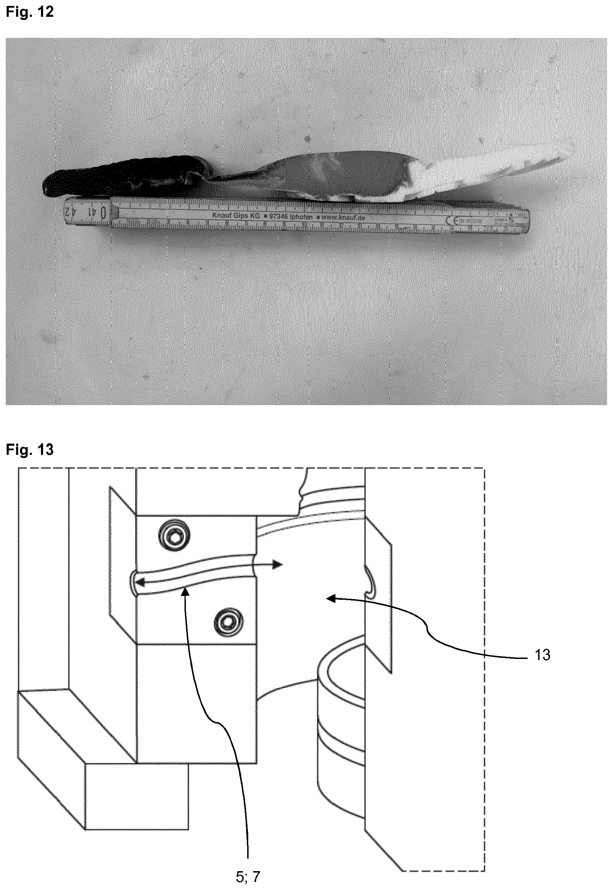

Advantageously by using a valve also before injecting the second molding material into a second section a (preferably predefined) second pressure builds up to yield an exact impact point at a desired second location of the cavity. Fig. 11 and 12 demonstrate the ability of the method to thereby produce a shoe sole with accurately separated sections.

### DETAILED DESCRIPTION OF THE INVENTION AND EXAMPLES

It should be understood that various alternatives to the embodiments of the invention described herein may be employed in practicing the invention. It is intended that the claims of the invention define the scope of the invention and that the method and apparatus within the scope of these claims and their equivalents be covered thereby.

Without intending to be limiting, the invention will be explained in more detail with reference to exemplary embodiments and the following figures:

### Brief description of the figures

- Fig. 1: Schematic illustration of a discrepancy between a desired and actual point of impact of injected molding material using methods of the prior art
- Fig. 2: Schematic illustration of a discrepancy between a desired and actual point of impact of injected molding material using methods of the prior art
- Fig. 3: Schematic illustration of a distribution of residual molding material at the end of an injection process using methods of the prior art
- Fig. 4: Schematic illustration of the implications of variations in a point of impact using methods of the prior art when producing sectioned molding articles
- Fig. 5: Schematic illustration of zones of a cavity that are impractical to reach using methods of the prior art
- Fig. 6: Schematic representation of a molding unit for an injection molding system as described herein
- Fig. 7: Schematic representation of a molding unit for an injection molding system as described herein
- Fig. 8: Schematic representation of a molding unit for an injection molding system as described herein
- Fig. 9: Schematic illustration of advantages of an injection molding system comprising a controllable valve within the sprue
- Fig. 10: Schematic illustration of advantages of an injection molding system comprising a controllable valve within the sprue
- Fig. 11: Photograph (top view) of a shoe midsole producible by an injection molding system as described herein
- Fig. 12: Photograph (cross-sectional view) of a shoe midsole producible by an injection molding system as described herein
- Fig. 13: Schematic representation to illustrate disadvantages of prior art injection molding system lacking a controllable valve within the sprue
- Fig. 14: Schematic representation to illustrate disadvantages of prior art injection molding system lacking a controllable valve within the sprue
- Fig. 15:: Sectional view of a preferred injection molding system for the manufacture of a shoe sole.
- Fig. 16: Valve assembly for the preferred injection molding system of Fig. 15
- Fig. 17: Diagram of preferred additives for the production of shoe soles.

### Detailed description of the figures

With respect to Fig. 1 - 5 disadvantages of injection processes using methods of the prior art that do not employ a time, volume or pressure dependent valve within a sprue are illustrated. The disadvantages are illustrated with respect to the manufacturing of a shoe sole, but may equally apply to other injection processes.

Processes for the manufacturing of shoe soles using injection molding systems as for instance described in DE 10 2015 108 086 typically include the following steps:
1. As initiated by the control unit a mold unit, in which a cavity is formed by means of two side molding elements, a base element and a closing element rotates in front of the nozzle mouthpiece of an injection unit.
2. The control unit initiates the translation of the injection unit to drive the nozzle mouthpiece against the sprue of the mold unit
3. The control unit initiates the mixing of the components of the molding material according to preset parameters. Within a mixing chamber of a mixing head of the injection unit chemical components of the required formulation are mixed and transported by means of a mixing screw into the mouthpiece. In the prior art the system is open without a closure in the area of the nozzle mouthpiece. Within the mixing chamber the material is mixed through a mixing screw rotating at approx. 15,000 - 18,000 rpm. During the mixing of the main material components polyol and isocyanates (= PU), color additives, hardeners, blowing agents or other additives may be added at the same time in order to achieve the material characteristics required for the sole.
4. The control unit initiates the injection process. The molding material mixture is injected in the parameterized amount and speed via the sprue into the molding cavity. The distribution of the molding material is governed by the impact point of the molding material and the selected viscosity.
   Unitary shoes soles will have the same characteristics (hardness, density, color, rebound, etc) along the length, width and thickness of the sole. For a multi-section injection process as e.g. described in DE 10 2015 108 086 A, the shoe sole can be subdivided into different sections with different characteristics (e.g. regarding hardness etc.).
5. The control unit initiates termination of the injection process. To this end the inlets of the mixing head for receiving components of molding material are closed and the mixing and transport of the molding material is terminated.
6. The control unit initiates the raising of the base element. Typically the base element is raised to a position that closes the sprue, such that no molding material can flow or foam out of the molding cavity back into the nozzle and injection unit. The material will now react according to predetermined parameters and will be ready to be taken out after a predetermined time. In order to produce further shoe soles the control unit initates a rotation towards the next position.

The inventors have realized that during the steps 3-5 the following issues arise as illustrated in Fig. 1-5.

By injecting the molding material from an open system (i.e. an open mixing chamber) into a cavity, which is also not completely closed the point of impact of the injected molding material is not precisely controllable, but varying patterns occur. This is particularly the case, when the closing element is a shoe last wrapped with an upper onto which a shoe sole is formed.

By injecting into a not completely closed or air-tight system, the pressure required to reach the point of impact is not reached at time point zero. Instead the final pressure needs to build up. The delay results in having an actual point of impact of the material (position A in Fig. 1) that is situated before (ie closer to the sprue) than the desired and final point of impact (position B in Fig. 1). Therefore the injection stream of molding material is dragged as illustrated by arrow C during the injection process from the initial point of impact towards the desired and final point of impact.

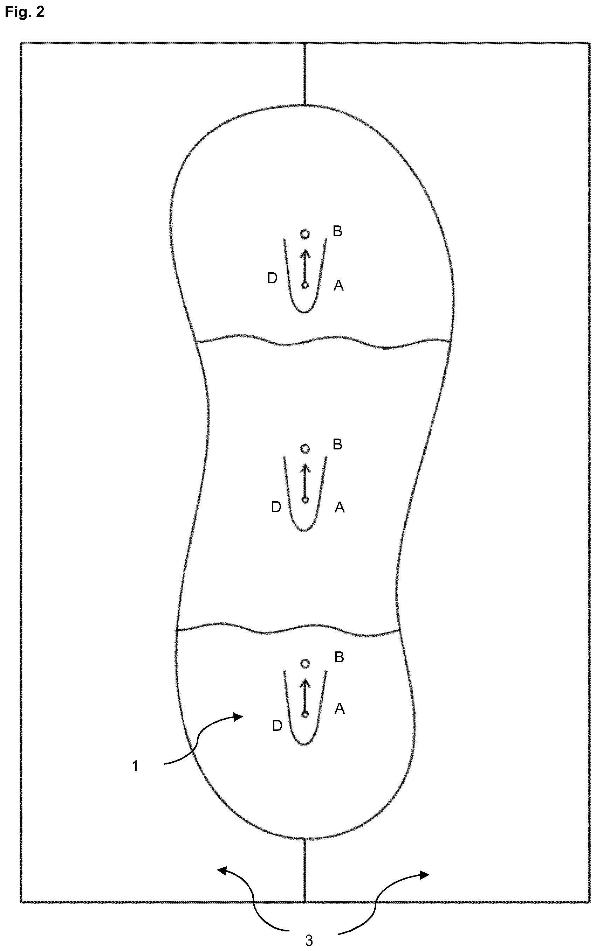

In the region of the carryover (ie where the impact point is dragged from A to B) the reaction cycle is triggered yielding a contamination zone of premature reacted material (D in Fig. 2).

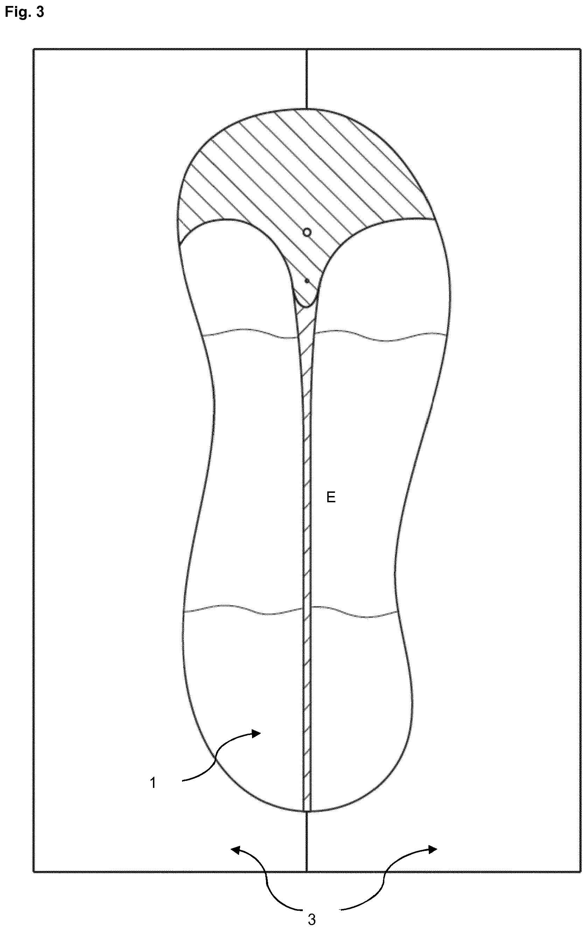

Once the injection process is completed the material supply is terminated as described in step 5. However, residual material remaining in the mixing chamber and in the sprue continues to be injected into the molding cavity due a not abruptly discontinuing injection pressure. Also upon terminating the injection a carryover of the residual material is thus placed on top of the already injected material. The contamination of fresh molding material on top of already reacted molding material may influence the reaction processing yielding undesired properties of the shoe sole (E in Fig. 3).

The aforementioned disadvantages occur in the manufacturing of unitary shoe soles and multi-sectioned shoe soles alike. However, in case of a multi-sectioned shoe sole the variations in the dynamics of the point of impact further lead to an undesired mixing of the sections.

In Fig. 4 the implications for an injection process for a shoe sole with multiple sections (F₁-F₃) are illustrated. The variations in the point of impact per section can lead to section 2 being already contaminated by material dragged from section 1 (G in Fig. 4). Thereby the properties of section 2 may deviate from the desired properties.

Furthermore, the changing of the material composition while residual material remains in the mixing chamber and in the sprue may lead to an undesired mixing and no clean separation of the individual sections (H in Fig. 4). If no cleaning shots are performed the material remaining within the mixing chamber and the material remaining in the sprue will be injected during injection of the second, third and so on n-th section and thus changing the desired properties

Furthermore, due to an open mixing system, a risk remains that the mixed material experiences uneven mixing energy, resulting in inhomogenously mixed material with different properties.

Moreover, in methods of the prior art the range of possible point of impacts of the molding material with respect to the molding cavity is limited by the material throughput rate and the diameter of the sprue. Fig. 5 illustrates the limitations with methods of the prior art without the use of a valve. Whereas impact points in the middle of the molding cavity (J in Fig. 5) are accessible, impact points far away or very close to sprue (K in Fig. 5) can typically not be reached due technical limitations regarding the material throughput and pump speed.

The disadvantages of the prior art are overcome by means of an injection molding system according to the invention that comprises a controllable valve situated within the sprue.

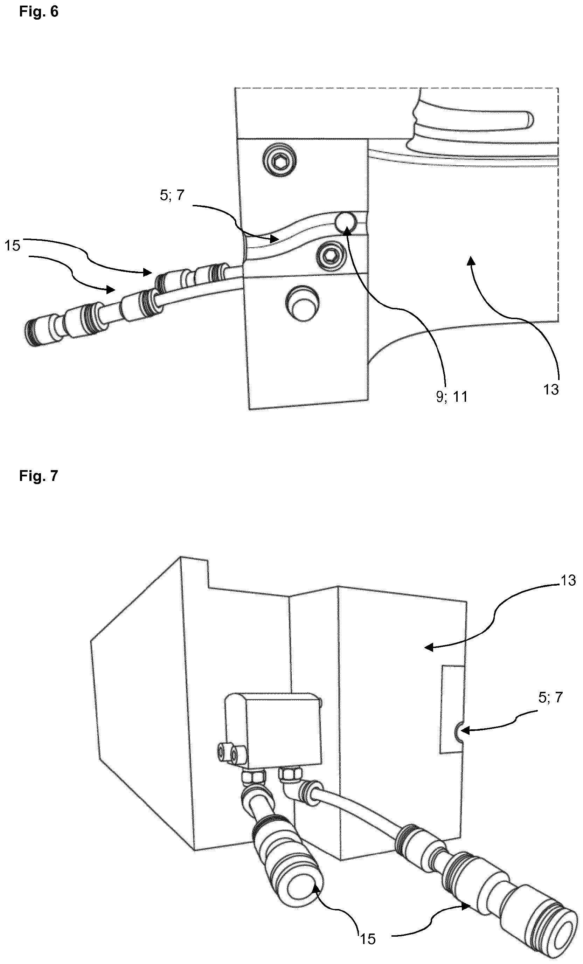

Fig. 6-8 show schematic representations of parts of a preferred embodiment of an injection molding system according to the invention with a focus on the sprue comprising the valve.

Fig. 6 depicts a sectional view of the molding unit. In the preferred embodiment the sprue 5 is unbranched, i.e. comprises (or is) a single feeding channel 7. The nozzle of the injection unit (not shown) may be connected on the left-hand side of the sprue. The sprue 5 exhibits a curved, sigmoidal shape, such that the end of the sprue facing the molding cavity is situated above the opposite end of the sprue facing the nozzle. The molding cavity will be formed by side molding elements, a base element and a closing element. In the schematic only one of the two side molding elements 13 is shown. Within the sprue 5 a valve 9 is situated at a close distance towards the end of the sprue 5 that will face the cavity. In the depicted embodiment the valve 9 is formed by a transverse movable locking bolting 11 under pneumatic control: To this end connections for a pneumatic control 15 are present, which via the control unit may allow for the opening and closing of the valve 9.

Fig. 7 shows a different view of the molding unit depicted in Fig. 6, in which the housing for the pneumatic control of the valve 9 can be seen. Furthermore, as visible in Fig. 7 the sprue 5 can be formed by a separate molding element that may be fitted into the side molding element 13. However, in other embodiments it can also be preferred that the sprue is formed in the side molding elements 13 themselves.

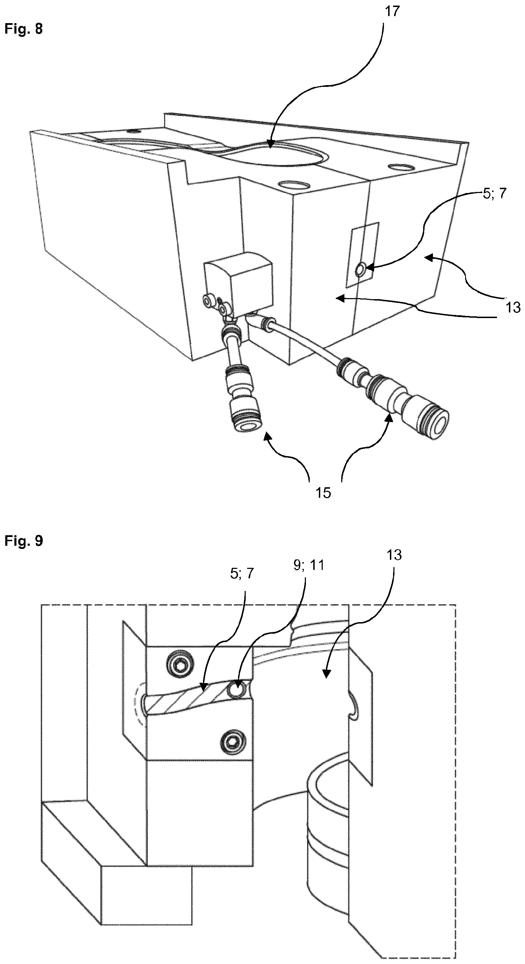

Fig. 8 illustrates the molding unit, in a state where the two side elements 13 are closed and may thus form together with a base element and closing element the molding cavity (not visible). For the present embodiment on the top of the molding unit an opening for a shoe last 17 is depicted to illustrate, where the closing element would be placed during operation of the injection molding system.

The advantages of a controllable valve within the sprue as described herein, and depicted in the preferred embodiments of Fig. 6-8 will be described in more detail with regards to Fig. 9-13.

In regards to the typically steps for manufacturing a shoe sole as described above, the controllable valve may be advantageously implemented as follows.

After translating the nozzle mouthpiece against the sprue 5 of the mold unit (see step 2 above), the control unit may initiate the closing of the valve 9 (see Fig. 9). In the depicted embodiments a movable locking bolt 11 is displayed that transverses the sprue 5 at the end closest to the cavity. Thereby the formerly open mixing system is now closed by the locking bolt 11 and there is only one space, which extends from the mixing chamber via the nozzle mouthpiece 17, 19 and the sprue 5 towards the valve 9.

After closure of the valve the mixing process begins (see step 3 above) and the mixing chamber as well as the sprue 5 (in the depicted example comprising a single feeding channel 7) are filled by the mixture of molding material. Due to the closed valve 9 the molding material cannot escape and a pressure is building up (see Fig. 10).

In order to start the injection process, the control unit opens the valve 9 and the molding material is injected towards the desired impact point within the molding cavity.

Due to the sudden opening of the valve 9 and the pressure that has been built up within the closed system, the pressure curve is more predictable, reproducible and more constant. In particular, no initial pressure needs to build up as it is the case for methods of the prior art and an open system. The dragging of material from an initial point of impact towards a desired and final point of impact as well as the associated disadvantages (see above and Fig. 1-4) are thus eliminated.

Also upon termination of the injection procedure the valve 9 may abruptly close and thus intersect the stream of injected molding material ensuring that no residual materialcontaminates the bottom of the molding cavity (see above and Fig. 5).

The use of a controllable valve 9 to close the sprue 5 and the associated possibility to build up a pressure controlled within the space formed by the sprue 5, nozzle and mixing chamber offers the possibility to precisely reach the desired point of impact of the material within the mold cavity and to avoid any contamination during the initiation or termination of the injection process.

Residual material is not promoted after completion of the injection process in the molding cavity, but remains in the mixing chamber and in the sprue 5, where it is either ejected by e.g. by an intermediate shot, which cleans the mixing chamber in the case of a unitary shoe sole or by building up an overpressure in the case of multiple section midsole. In the multi-section injection process, the material remaining in the mixing chamber and in the sprue 5 may be ejected from the closed system during injection of the second, third or nth section by means of an overpressure and thus fed to the originally envisaged section, while the subsequent new material mixture for the assigned section can be supplied. Thereby neither the next molding cavity (on a rotary table, comprising multiple molding units) or the an adjacent section within the molding cavity for a single shoe sole is contaminated.

Instead as can be seen in Fig. 11 and 12 the section of shoe midsole can be cleanly separated and there is no mixing of the desired characteristics is observed.

Furthermore by building up a pre-defined pressure, a larger diameter for the sprue can be used and the range of impact points can be increased (see Fig. 5 for prior limitations).

For instance for reaching a point of impact closer to the feeding channel of the sprue, the lowest material throughput rate can be used, while increasing or decreasing the diameter of the sprue allows to put the impact point closer or further away.

Furthermore, while without using a valve as illustrated in Fig. 13 by the double arrow a backflow of molding material may occur, using a valve this can be reliable prevented.

Moreover, as shown in Fig. 14 without using a valve in injection molding systems of the prior art typically the base element 23 is used in order to close the connection to the nozzle and injection unit. By profiting of a controllable valve at the end of the sprue this is no longer necessary: Instead the base element may be elevated according to other factors of the injection process. For instance if the rate of the elevation of the base element may be adapted towards the rate of rising of a foam, if foamable molding materials such as PU are used.

The controllable valve within the sprue may be implemented in a variety of injection molding systems to convey the discussed advantages.

In a particular preferred embodiment of the invention the valve may be implemented into an injection molding system capable to produce multi-sectioned shoe soles as depicted in Fig. 15.

Fig. 15 shows a cross-sectional view of an injection molding system for creating a sole. This system comprises an injection unit 25 in the form of a mixing head 27, which is provided substantially of a housing 29, in which a mixing screw 31 is disposed rotatably and translationally movable in a mixing chamber 33. According to the taper of the mixing chamber 33 also the mixing screw 31 is conical extending towards the nozzle mouthpiece 19. The nozzle mouthpiece 19 is applied to a sprue 5 of a molding unit 35, comprising two side molding elements 3 and a base element 23. In the present example the closing element 39 is a shoe last 37 with an upper 38.

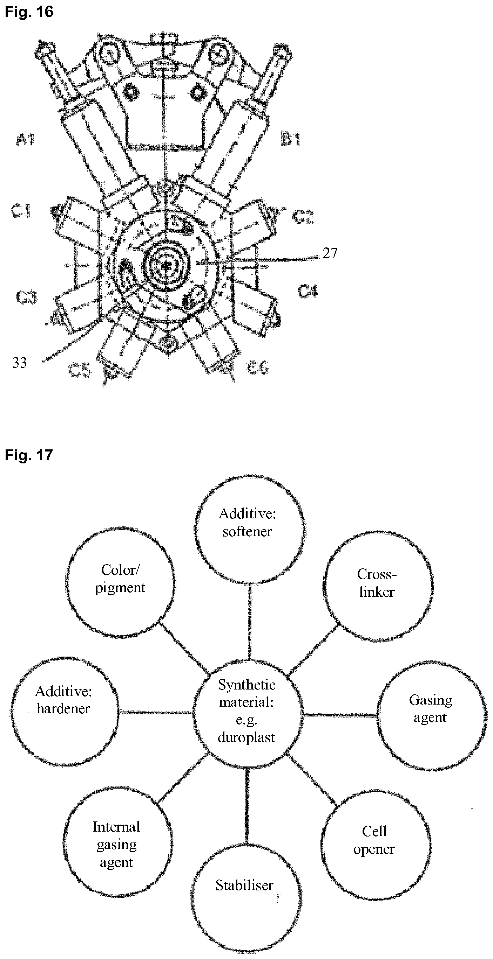

At the end of injection unit 25, which is at the opposite side of the nozzle mouthpiece 19, valve inlets 39 for provision of molding material components open into a feeding system for a thermoplastic base material and additives that may be blended to the base material. The base material and the additives are introduced via a valve inlet arrangement (FIG. 16) into the mixing chamber 33, wherein the valve inlet assembly is radially disposed around the mixing chamber 33. A1 and B1 denote the valve inlets, which are responsible for supplying the thermoplastic material, while references C1 to C6 denote the valve inlets, which are responsible for supplying the respective additives. Figure 17 shows possible combinations of a base material and various additives are displayed.

According to predetermined parameters the preferred combinations of base material and additives may thus be blended individually for each segment of the multi-sectioned shoe sole. In order inject the molding material to the desired location within the molding cavity 1, the material input rate towards the mixing head 27 is controlled.

However, as described above the closable valve 9 situated within the sprue 5 allows for the built up of a predefined pressure and thus a more precise control of the impact point of molding material for each section. Thereby contaminations can be avoided and cleanly separated multi-sectioned shoe soles may be produced (see above and Fig. 11 and 12).

### LIST OF REFERENCE SIGNS

- 1: molding cavity
- 3: side molding elements
- 5: sprue
- 7: feeding channel of the sprue
- 9: valve
- 11: movable locking bolt
- 13: side molding element
- 15: connections for a pneumatic control of the valve
- 17: opening for a shoe last as a closing element
- 19: nozzle mouthpiece
- 21: nozzle
- 23: base element
- 25: injection unit
- 27: mixing head
- 29: housing of the mixing head
- 31: mixing screw
- 33: mixing chamber
- 35: molding unit
- 37: shoe last
- 38: shoe upper
- 39: inlets for provision of molding material components
- 40: closing element

## Claims

1. Injection molding system for manufacturing a molded article, preferably a shoe sole, comprising:
an injection unit comprising a nozzle (21);
a sprue (5);
a cavity (1); and
a control unit,
wherein the nozzle (21) is connectable to the sprue (5), such that molding material is injectable via the sprue (5) into the cavity (1) to form a molded article,
the system comprises a valve (9) situated within the sprue (5), wherein the control unit is configured to introduce molding material into the sprue (5) while the valve (9) is closed, and to open the valve (9) after a time has elapsed, such that an increased pressure is achieved within the sprue (5) prior to opening the valve (9) and injecting the molding material into the cavity (1), **characterized in that** the control unit comprises reference data for a correlation of the elapsed time and/or the increased pressure with a point of impact of the injected molding material in the cavity.

2. Injection molding system according to any one of the preceding claims
**characterized in that**
the control unit is further configured to discontinue injection of the molding material by closing the valve (9) and/or
to partially close or open the valve (9) in order to generate a constriction within the sprue (5).

3. Injection molding system according to any one of the preceding claims
**characterized in that**
the valve (9) comprises or consists of a (preferably transverse) movable locking bolt (11), under pneumatic control.

4. Injection molding system according to any one of the preceding claims
**characterized in that**
the valve (9) is located within a distance from an end of the sprue (5) facing the cavity (1) of 2 mm to 20 mm and/or
the sprue (5) exhibits a diameter of 1 mm to 15 mm, preferably 3 mm to 10 mm and/or a length of 5 mm to 200 mm.

5. Injection molding system according to any one of the preceding claims
**characterized in that**
the sprue (5) exhibits a curved, preferably sigmoidal, shape, wherein the end of the sprue (5) facing the cavity (1) is situated above the end of the sprue (5) facing the nozzle (21).

6. Injection molding system according to any one of the preceding claims
**characterized in that**
the sprue (5) is branched, wherein the branched sprue comprises two or more feeding channels (7) (branches), wherein a valve (9) is situated in each of the feeding channels (7).

7. Injection molding system according to any one of the preceding claims
**characterized in that**
the injection molding system comprises a pressure sensor situated within the sprue (5), and wherein the control unit is configured such that the valve (9) may be opened or closed depending on the pressure determined by said sensor.

8. Injection molding system according to any one of the preceding claims
**characterized in that**
the control unit comprises reference data for the pressure within the sprue (5) and the point of contact of the injected molding material in the cavity (1), preferably wherein the pressure within the sprue (5) and the point of contact of the injected molding material in the cavity (1) correlate with one another.

9. Injection molding system according to any one of the preceding claims
**characterized in that**
the cavity (1) is formed by two side molding elements (3), a base element (23) and optionally a closing element (40), wherein preferably the cavity (1) takes the form of a shoe sole.

10. Injection molding system according to any one of the previous claims
**characterized in that**
the injection unit comprises a mixing head (27) with at least one, preferably at least two valve inlets (39) for one or more base materials and one or more additives, wherein the mixing head (27) is configured to mix the one or more base materials with the one or more additives to form the molding material, wherein
the mixing head (27) comprises preferably a mixing screw (31) within a mixing chamber (33) to which the at least one, preferably at least two valve inlets (39) are connected, such that the one or more base materials and the one or more additives are mixable to form the molding material.

11. Injection molding system according to any one of the preceding claims
**characterized in that**
the control unit is configured to
- mix a first molding material and inject said first molding material in to a first section of the cavity (1); and subsequently
- mix a second molding material and inject said second molding material in to a second section of the cavity (1)
such that a multi-sectioned molded article with at least two (distinct) sections is formed.

12. Kit for equipping an injection molding system with a valve-controllable sprue, comprising
- a module comprising a sprue (5) in which a valve (9) is situated,
- reference data for a correlation of the elapsed time and/or the increased pressure with a point of impact of the injected molding material in the cavity and
- a computer program adapted for generating commands suitable to control the valve (9) in relation to the injection unit of the injection molding system according to any one of the preceding claims, and to introduce molding material into the sprue (5) while the valve (9) is closed, and to open the valve (9) after a time has elapsed, such that an increased pressure is achieved within the sprue (5) prior to opening the valve (9) and injecting the molding material into the cavity (1).

13. Method for manufacturing a molded article, preferably a shoe sole, comprising
- providing an injection molding system according to any one of claims 1 - 11,
- injecting the molding material into the sprue (5) while the valve (9) is closed, thereby allowing an increase in pressure, preferably to a pre-defined pressure, within the sprue (5),
- opening the valve after a time has elapsed, allowing the molding material to be injected to a predetermined location of the cavity (1), and
- closing the valve (9) in order stop the injection of the molding material.

14. Method according the previous claim
**characterized in that**
the molding material is provided prior to injection by mixing one or more base materials with one or more additives,
wherein the one or more base materials are preferably a polyol and an isocyanate, such that a polyurethane is formed as a molding material and/or
wherein the one or more additives are selected from a group comprising a color additive, a hardener, a softener, a crosslinker, gasing agent, a propellant, a cell opener or a stabilizer.

15. Method according the any one of the previous claim 12 or 13,
comprising:
- a first molding material is mixed,
- the first molding material is injected into the sprue (5) while the valve (9) is closed such that an increased (preferably predefined) first pressure is achieved within the sprue (5) prior to opening the valve (9),
- the valve (9) is opened to inject the first molding material to a first predetermined location of a first section of the cavity (1),
- the valve (9) is closed to stop the injection of the first molding material,
- a second molding material is mixed,
- the second molding material is injected into the sprue (5) while the valve (9) is closed such that an increased (preferably predefined) second pressure is achieved within the sprue (5) prior to opening the valve (9),
- the valve (9) is opened to inject the second molding material to a second predetermined location of a second section of the cavity (1), and
- the valve (9) is closed to stop the injection of the second molding material.

## Patentansprüche

1. Spritzgießsystem zum Herstellen eines Formerzeugnisses, bevorzugt einer Schuhsohle, umfassend:
eine Spritzeinheit, umfassend eine Düse (21);
einen Anguss (5);
einen Hohlraum (1); und
eine Steuereinheit,
wobei die Düse (21) mit dem Anguss (5) derart verbindbar ist,
dass Formmaterial über den Anguss (5) in den Hohlraum (1) einspritzbar ist, um ein Formerzeugnis zu bilden,
wobei das System ein Ventil (9) umfasst, das innerhalb des Angusses (5) angeordnet ist, wobei die Steuereinheit dazu konfiguriert ist, Formmaterial in den Anguss (5) einzuführen,
während das Ventil (9) geschlossen ist, und das Ventil (9) zu öffnen, nachdem eine Zeit verstrichen ist, sodass ein erhöhter Druck innerhalb des Angusses (5) vor Öffnen des Ventils (9) und Einspritzen des Formmaterials in den Hohlraum (1) erreicht wird,
**dadurch gekennzeichnet, dass** die Steuereinheit Referenzdaten für eine Korrelation der verstrichenen Zeit und/oder des erhöhten Drucks mit einem Auftreffpunkt des eingespritzten Formmaterials in dem Hohlraum umfasst.

2. Spritzgießsystem nach einem der vorhergehenden Ansprüche, **dadurch gekennzeichnet, dass**
die Steuereinheit ferner dazu konfiguriert ist, die Einspritzung des Formmaterials durch Schließen des Ventils (9) zu unterbrechen und/oder
das Ventil (9) teilweise zu schließen oder zu öffnen, um eine Verengung innerhalb des Angusses (5) zu erzeugen.

3. Spritzgießsystem nach einem der vorhergehenden Ansprüche, **dadurch gekennzeichnet, dass**
das Ventil (9) einen (bevorzugt quer) beweglichen Arretierbolzen (11) unter Druckluftsteuerung umfasst oder daraus besteht.

4. Spritzgießsystem nach einem der vorhergehenden Ansprüche, **dadurch gekennzeichnet, dass**
sich das Ventil (9) innerhalb eines Abstands von einem dem Hohlraum (1) zugewandten Ende des Angusses (5) von 2 mm bis 20 mm befindet und/oder
der Anguss (5) einen Durchmesser von 1 mm bis 15 mm, bevorzugt 3 mm bis 10 mm, und/oder eine Länge von 5 mm bis 200 mm aufweist.

5. Spritzgießsystem nach einem der vorhergehenden Ansprüche, **dadurch gekennzeichnet, dass**
der Anguss (5) eine gekrümmte, bevorzugt S-förmige, Gestalt aufweist, wobei das dem Hohlraum (1) zugewandte Ende des Angusses (5) über dem der Düse (21) zugewandten Ende des Angusses (5) angeordnet ist.

6. Spritzgießsystem nach einem der vorhergehenden Ansprüche, **dadurch gekennzeichnet, dass**
der Anguss (5) verzweigt ist, wobei der verzweigte Anguss zwei oder mehr Zuführkanäle (7) (Zweige) umfasst, wobei ein Ventil (9) in jedem der Zuführkanäle (7) angeordnet ist.

7. Spritzgießsystem nach einem der vorhergehenden Ansprüche, **dadurch gekennzeichnet, dass**
das Spritzgießsystem einen Drucksensor umfasst, der innerhalb des Angusses (5) angeordnet ist, und wobei die Steuereinheit derart konfiguriert ist, dass das Ventil (9) abhängig von dem durch den Sensor bestimmten Druck geöffnet oder geschlossen werden kann.

8. Spritzgießsystem nach einem der vorhergehenden Ansprüche, **dadurch gekennzeichnet, dass**
die Steuereinheit Referenzdaten für den Druck innerhalb des Angusses (5) und den Kontaktpunkt des eingespritzten Formmaterials in dem Hohlraum (1) umfasst, wobei bevorzugt der Druck innerhalb des Angusses (5) und der Kontaktpunkt des eingespritzten Formmaterials in dem Hohlraum (1) miteinander korrelieren.

9. Spritzgießsystem nach einem der vorhergehenden Ansprüche **dadurch gekennzeichnet, dass**
der Hohlraum (1) durch zwei Seitenformelemente (3), ein Basiselement (23) und gegebenenfalls ein Schließelement (40) gebildet ist, wobei der Hohlraum (1) bevorzugt die Form einer Schuhsohle annimmt.

10. Spritzgießsystem nach einem der vorhergehenden Ansprüche, **dadurch gekennzeichnet, dass**
die Spritzeinheit einen Mischkopf (27) mit mindestens einem, bevorzugt mindestens zwei Ventileinlässen (39) für ein oder mehrere Grundmaterialen und ein oder mehrere Additive umfasst, wobei der Mischkopf (27) dazu konfiguriert ist, das eine oder die mehreren Grundmaterialien mit dem einen oder den mehreren Additiven zu mischen, um das Formmaterial zu bilden, wobei der Mischkopf (27) bevorzugt eine Mischschnecke (31) innerhalb einer Mischkammer (33) umfasst, mit welcher der mindestens eine, bevorzugt die mindestens zwei Ventileinlässe (39) derart verbunden sind, dass das eine oder die mehreren Grundmaterialien und das eine oder die mehreren Additive mischbar sind, um das Formmaterial zu bilden.

11. Spritzgießsystem nach einem der vorhergehenden Ansprüche, **dadurch gekennzeichnet, dass**
die Steuereinheit konfiguriert ist zum
- Mischen eines ersten Formmaterials und Einspritzen des ersten Formmaterials in einen ersten Abschnitt des Hohlraums (1); und anschließend
- Mischen eines zweiten Formmaterials und Einspritzen des zweiten Formmaterials in einen zweiten Abschnitt des Hohlraums (1)
derart, dass ein mehrgliedriges Formerzeugnis mit mindestens zwei (gesonderten) Abschnitten gebildet wird.

12. Kit zum Ausstatten eines Spritzgießsystems mit einem ventilsteuerbaren Anguss, umfassend
- ein Modul, umfassend einen Anguss (5), in dem ein Ventil (9) angeordnet ist,
- Referenzdaten für eine Korrelation der verstrichenen Zeit und/oder des erhöhten Drucks mit einem Auftreffpunkt des eingespritzten Formmaterials in dem Hohlraum und
- ein Computerprogramm, das zum Erzeugen von Befehlen ausgelegt ist, die dazu geeignet, sind, das Ventil (9) in Bezug auf die Spritzeinheit des Spritzgießsystems nach einem der vorhergehenden Ansprüche zu steuern und Formmaterial in den Anguss (5) einzuführen, während das Ventil (9) geschlossen ist, und das Ventil (9) zu öffnen, nachdem eine Zeit verstrichen ist, sodass ein erhöhter Druck innerhalb des Angusses (5) vor Öffnen des Ventils (9) und Einspritzen des Formmaterials in den Hohlraum (1) erreicht wird.

13. Verfahren zum Herstellen eines Formerzeugnisses, bevorzugt einer Schuhsohle, umfassend
- Bereitstellen eines Spritzgießsystems nach einem der Ansprüche 1-11,
- Einspritzen des Formmaterials in den Anguss (5), während das Ventil (9) geschlossen ist, wodurch eine Erhöhung des Drucks, bevorzugt auf einen vordefinierten Druck, innerhalb des Angusses (5) ermöglicht wird,
- Öffnen des Ventils, nachdem eine Zeit verstrichen ist, wodurch es möglich ist, das Formmaterial an einer vorgegebenen Stelle des Hohlraums (1) einzuspritzen, und
- Schließen des Ventils (9), um die Einspritzung des Formmaterials zu beenden.

14. Verfahren nach dem vorhergehenden Anspruch,
**dadurch gekennzeichnet, dass**
das Formmaterial vor der Einspritzung durch Mischen eines oder mehrerer Grundmaterialien mit einem oder mehreren Additiven bereitgestellt wird,
wobei es sich bei dem einen oder den mehreren Grundmaterialien bevorzugt um ein Polyol und ein Isocyanat handelt, sodass ein Polyurethan als ein Formmaterial gebildet wird, und/oder wobei das eine oder die mehreren Additive ausgewählt sind aus einer Gruppe, umfassend ein Farbadditiv, einen Härter, einen Weichmacher, einen Vernetzer, ein Begasungsmittel, ein Treibmittel, einen Zellöffner oder einen Stabilisator.

15. Verfahren nach einem der vorhergehenden Ansprüche 12 oder 13,
umfassend:
- ein erstes Formmaterial wird gemischt,
- das erste Formmaterial wird in den Anguss (5) eingespritzt, während das Ventil (9) geschlossen ist, sodass ein erhöhter (bevorzugt vordefinierter) erster Druck innerhalb des Angusses (5) vor Öffnen des Ventils (9) erreicht wird,
- das Ventil (9) wird geöffnet, um das erste Formmaterial an einer ersten vordefinierten Stelle eines ersten Abschnitts des Hohlraums (1) einzuspritzen,
- das Ventil (9) wird geschlossen, um die Einspritzung des ersten Formmaterials zu beenden,
- ein zweites Formmaterial wird gemischt,
- das zweite Formmaterial wird in den Anguss (5) eingespritzt, während das Ventil (9) geschlossen ist, sodass ein erhöhter (bevorzugt vordefinierter) zweiter Druck innerhalb des Angusses (5) vor Öffnen des Ventils (9) erreicht wird,
- das Ventil (9) wird geöffnet, um das zweite Formmaterial an einer zweiten vordefinierten Stelle eines zweiten Abschnitts des Hohlraums (1) einzuspritzen, und
- das Ventil (9) wird geschlossen, um die Einspritzung des zweiten Formmaterials zu beenden.

## Revendications

1. Système de moulage par injection pour fabriquer un article moulé, de préférence une semelle de chaussure, comprenant :
une unité d'injection comprenant une buse (21) ;
une carotte (5) ;
une cavité (1) ; et
une unité de commande,
dans lequel la buse (21) peut être reliée à la carotte (5), de sorte que le matériau de moulage peut être injecté par l'intermédiaire de la carotte (5) dans la cavité (1) pour former un article moulé,
le système comprend une soupape (9) située à l'intérieur de la carotte (5), dans lequel l'unité de commande est configurée pour introduire un matériau de moulage dans la carotte (5) tandis que la soupape (9) est fermée, et pour ouvrir la soupape (9) après un temps écoulé, de sorte qu'une pression accrue est obtenue à l'intérieur de la carotte (5) avant l'ouverture de la soupape (9) et l'injection du matériau de moulage dans la cavité (1), **caractérisé en ce que** l'unité de commande comprend des données de référence pour une corrélation du temps écoulé et/ou de la pression accrue avec un point d'impact du matériau de moulage injecté dans la cavité.

2. Système de moulage par injection selon l'une quelconque des revendications précédentes
**caractérisé en ce que**
l'unité de commande est en outre configurée pour interrompre l'injection du matériau de moulage en fermant la soupape (9) et/ou
pour fermer ou ouvrir partiellement la soupape (9) afin de générer un rétrécissement à l'intérieur de la carotte (5).

3. Système de moulage par injection selon l'une quelconque des revendications précédentes
**caractérisé en ce que**
la soupape (9) comprend ou est constituée d'un boulon de verrouillage mobile (de préférence transversal) (11), sous commande pneumatique.

4. Système de moulage par injection selon l'une quelconque des revendications précédentes
**caractérisé en ce que**
la soupape (9) est située dans les limites d'une distance depuis une extrémité de la carotte (5) faisant face à la cavité (1) de 2 mm à 20 mm et/ou
la carotte (5) présente un diamètre de 1 mm à 15 mm, de préférence de 3 mm à 10 mm et/ou une longueur de 5 mm à 200 mm.

5. Système de moulage par injection selon l'une quelconque des revendications précédentes
**caractérisé en ce que**
la carotte (5) présente une forme courbe, de préférence sigmoïdale, dans lequel l'extrémité de la carotte (5) faisant face à la cavité (1) est située au-dessus de l'extrémité de la carotte (5) faisant face à la buse (21).

6. Système de moulage par injection selon l'une quelconque des revendications précédentes
**caractérisé en ce que**
la carotte (5) est ramifiée, dans lequel la carotte ramifiée comprend au moins deux canaux d'alimentation (7) (branches), dans lequel une soupape (9) est située dans chacun des canaux d'alimentation (7).

7. Système de moulage par injection selon l'une quelconque des revendications précédentes
**caractérisé en ce que**
le système de moulage par injection comprend un capteur de pression situé à l'intérieur de la carotte (5), et dans lequel l'unité de commande est configurée de sorte que la soupape (9) peut être ouverte ou fermée en fonction de la pression déterminée par ledit capteur.

8. Système de moulage par injection selon l'une quelconque des revendications précédentes
**caractérisé en ce que**
l'unité de commande comprend des données de référence pour la pression à l'intérieur de la carotte (5) et le point de contact du matériau de moulage injecté dans la cavité (1), de préférence dans lequel la pression à l'intérieur de la carotte (5) et le point de contact du matériau de moulage injecté dans la cavité (1) sont en corrélation l'un avec l'autre.

9. Système de moulage par injection selon l'une quelconque des revendications précédentes
**caractérisé en ce que**
la cavité (1) est formée par deux éléments de moulage latéraux (3), un élément de base (23) et éventuellement un élément de fermeture (40), dans lequel la cavité (1) prend de préférence la forme d'une semelle de chaussure.

10. Système de moulage par injection selon l'une quelconque des revendications précédentes
**caractérisé en ce que**
l'unité d'injection comprend une tête de mélange (27) avec au moins une, de préférence au moins deux entrées de soupape (39) pour un ou plusieurs matériaux de base et un ou plusieurs additifs, dans lequel la tête de mélange (27) est configurée pour mélanger les un ou plusieurs matériaux de base avec les un ou plusieurs additifs afin de former le matériau de moulage, dans lequel
la tête de mélange (27) comprend de préférence une vis de mélange (31) à l'intérieur d'une chambre de mélange (33) à laquelle l'au moins une, de préférence au moins deux entrées de soupape (39) sont reliées, de sorte que les un ou plusieurs matériaux de base et les un ou plusieurs additifs peuvent être mélangés pour former le matériau de moulage.

11. Système de moulage par injection selon l'une quelconque des revendications précédentes
**caractérisé en ce que**
l'unité de commande est configurée pour
- mélanger un premier matériau de moulage et injecter ledit premier matériau de moulage dans une première section de la cavité (1) ; et par la suite
- mélanger un second matériau de moulage et injecter ledit second matériau de moulage dans une seconde section de la cavité (1)
de sorte qu'un article moulé à sections multiples avec au moins deux sections (distinctes) est formé.

12. Kit pour équiper un système de moulage par injection d'une carotte pouvant être commandée par soupape, comprenant
- un module comprenant une carotte (5) dans laquelle est située une soupape (9),
- des données de référence pour une corrélation du temps écoulé et/ou de la pression accrue avec un point d'impact du matériau de moulage injecté dans la cavité et
- un programme informatique conçu pour générer des commandes appropriées afin de commander la soupape (9) par rapport à l'unité d'injection du système de moulage par injection selon l'une quelconque des revendications précédentes, et pour introduire un matériau de moulage dans la carotte (5) tandis que la soupape (9) est fermée, et pour ouvrir la soupape (9) après un temps écoulé, de sorte qu'une pression accrue est obtenue à l'intérieur de la carotte (5) avant l'ouverture de la soupape (9) et d'injecter le matériau de moulage dans la cavité (1) .

13. Procédé de fabrication d'un article moulé, de préférence une semelle de chaussure, comprenant
- la fourniture d'un système de moulage par injection selon l'une quelconque des revendications 1 à 11,
- l'injection du matériau de moulage dans la carotte (5) tandis que la soupape (9) est fermée, permettant ainsi une augmentation de la pression, de préférence à une pression prédéfinie, à l'intérieur la carotte (5),
- l'ouverture de la soupape après un temps écoulé, permettant au matériau de moulage d'être injecté à un emplacement prédéterminé de la cavité (1), et
- la fermeture de la soupape (9) afin d'arrêter l'injection du matériau de moulage.

14. Procédé selon la revendication précédente **caractérisé en ce que**
le matériau de moulage est fourni avant l'injection en mélangeant un ou plusieurs matériaux de base avec un ou plusieurs additifs,
dans lequel les un ou plusieurs matériaux de base sont de préférence un polyol et un isocyanate, de sorte qu'un polyuréthane est formé comme matériau de moulage et/ou dans lequel les un ou plusieurs additifs sont choisis dans un groupe comprenant un additif de couleur, un agent de durcissement, un agent adoucissant, un agent de réticulation, un agent gazeux, un agent propulseur, un agent d'ouverture de cellule ou un agent stabilisant.

15. Procédé selon l'une quelconque des revendications précédentes 12 ou 13, comprenant :
- un premier matériau de moulage mélangé,
- le premier matériau de moulage injecté dans la carotte (5) tandis que la soupape (9) est fermée de sorte qu'une première pression accrue (de préférence prédéfinie) est obtenue à l'intérieur de la carotte (5) avant l'ouverture de la soupape (9),
- la soupape (9) ouverte pour injecter le premier matériau de moulage à un premier emplacement prédéterminé d'une première section de la cavité (1),
- la soupape (9) fermée pour arrêter l'injection du premier matériau de moulage,
- un second matériau de moulage mélangé,
- le second matériau de moulage injecté dans la carotte (5) tandis que la soupape (9) est fermée de sorte qu'une seconde pression accrue (de préférence prédéfinie) est obtenue à l'intérieur de la carotte (5) avant l'ouverture de la soupape (9),
- la soupape (9) ouverte pour injecter le second matériau de moulage à un second emplacement prédéterminé d'une seconde section de la cavité (1), et
- la soupape (9) est fermée pour arrêter l'injection du second matériau de moulage.
